# EUROPEAN PATENT APPLICATION

(11) **EP 4 817 736 A1**
(43) Date of publication of application: **07.10.2026**
(21) Application number: 26169879.9
(22) Date of filing: 31.03.2026
(51) Int. Cl.: B01J 20/34, B01D 53/50, B01J 20/20

(54) **METHOD OF REGENERATION OF CARBONACEOUS ADSORBENT**

(30) Priority: 31.03.2025 BE 202505191
(71) Applicant: Cargen Group BV, 2070 Zwijndrecht (BE)
(72) Inventor: VAN DIJCK, Geert, 2070 Zwijndrecht (BE)
(74) Representative: Brantsandpatents bv

(57) **Abstract**

The present invention relates to a method for the regeneration of carbonaceous adsorbent, comprising the steps of: (a) providing a carbonaceous adsorbent containing sulfur contaminants, (b) pyrolyzing the absorbed sulfur contaminants in a furnace, wherein pyrolysis gases are generated that contain SO₂, (c) combusting the pyrolysis gases in an afterburner, wherein flue gases are obtained that contain SO₂, (d) cooling the flue gases and removing dust from the flue gases, (e) reacting the SO₂ present in the flue gases with ammonia water, whereby ammonium sulfate is formed.

## Description

### TECHNICAL FIELD

The invention relates to a method for regenerating a carbonaceous adsorbent. More particularly, the present invention relates to a method for regenerating a carbonaceous adsorbent that is contaminated with adsorbed sulfur contaminants, resulting from the use of the carbonaceous adsorbent in the purification of a gas or liquid containing sulfur contaminants.

### BACKGROUND ART

Carbonaceous adsorbents, and in particular activated carbon, are characterized by their high adsorption capacity for substances from gases and liquids and by their catalytic properties for converting and breaking down these substances. They are particularly suitable for adsorbing and removing contaminants from gases and liquids, as well as for decolorizing, deodorizing, and purifying wastewater and flue gases.

Carbonaceous adsorbent is used in particular for the purification of methane-containing gas. The methane-containing gases initially obtained contain considerable amounts of sulfur. In addition to the removal of water, oil, carbon dioxide, and other by-products, the removal of sulfur from methane-containing gas is one of the most important purification processes. Sulfur occurs in methane-rich gases as hydrogen sulfide (H₂S) or volatile organic sulfur compounds (including mercaptans). The presence of sulfur causes a penetrating odor and is very harmful to inhale, as it can cause asthma attacks and may even have fatal consequences. Furthermore, the presence of sulfur can make the gas highly corrosive, whereby it becomes totally unsuitable for use in gases intended for energy supply, as it would cause damage to the equipment used. Typical methane-containing gases comprise biogas, landfill gas, mine gas, flue gas, marsh gas, or natural gas. When the amount of gas or liquid to be treated is relatively small, the carbonaceous adsorbent is generally used until fully saturated (i.e., to a small remaining adsorption capacity), after which the used or saturated carbonaceous adsorbent is usually discarded. In large-scale industrial applications and industrial wastewater treatment, however, it is economically important that the large quantities of used carbonaceous adsorbents are regenerated and reused.

Carbon is, after all, a natural product obtained by destructive distillation at high temperatures of, for example, coking coal, lignite coke, or organic material such as peat and coconut shells. The fine carbon powder thus obtained is granulated in order to facilitate handling and to improve the filtration capacity and other physical properties of the carbon. In large-scale industrial applications, the carbonaceous adsorbent constitutes an important cost factor. Methods for the manufacture of activated carbon are often described in the literature, including in patent publication US 4,107,084.

There are many known methods for regeneration, that is to say for removing adsorbed substances and reactivating used carbonaceous adsorbent. Extraction with solvents under supercritical or non-supercritical conditions is described, but the most common methods comprise the removal of excess water and pyrolysis of the dried carbonaceous adsorbent to volatile substances and carbon residues. Most methods for the regeneration of used carbonaceous adsorbent are based on the well-known water-gas reaction, wherein carbon residues react with water at high temperatures to form carbon monoxide and hydrogen. A typical method for the regeneration of activated carbon is described in patent publication US 4,008,994.

The used carbonaceous adsorbent is usually heated in the presence of a carrier gas and/or steam to a temperature of 100°C to 900°C in order to remove adsorbed substances by pyrolysis. In order to increase the adsorption capacity of the carbonaceous adsorbent, the carbonaceous adsorbent may contain a catalyst to convert H₂S into elemental sulfur. In this way, a high loading level of the carbonaceous adsorbent can be achieved, whereby the service life of the activated carbon filter is extended.

Patent application EP2628533A1 describes a method for the regeneration of used carbonaceous adsorbent, comprising the steps of:
a) feeding used carbonaceous adsorbent to a drying and pyrolysis furnace,
b) drying the used carbonaceous adsorbent,
c) regenerating the carbonaceous adsorbent by pyrolysis, wherein pyrolysis gases and volatile substances are released, and
d) combusting the pyrolysis gases in a combustion furnace, wherein the method is characterized in that volatile substances are removed from the pyrolysis gases by condensation prior to the combustion of the pyrolysis gases in a combustion furnace.

EP3900823 and EP3900824 describe a method wherein SO₂ in flue gases is reacted with calcium hydroxide and/or calcium carbonate, whereby calcium sulfite is produced. In these systems, calcium sulfite must be oxidized to calcium sulfate (gypsum), and must furthermore be dewatered and processed. These additional process steps require extra energy, water, and installation components and generate additional residual streams such as wastewater. Moreover, in practice the reusability of gypsum is limited and it can, when it ends up at landfills, form hydrogen sulfide gas (H₂S) under anaerobic conditions, which is both toxic and a nuisance. Furthermore, it unnecessarily takes up a great deal of space at landfills. Furthermore, the production of calcium hydroxide entails a considerable CO₂ burden of approximately 1.5 ton CO₂ per ton of SO₂ removed.

### SUMMARY OF THE INVENTION

However, when the carbonaceous adsorbent contains a high amount of sulfur, for example a loading of 20.0 to 60.0 weight percent, based on the weight of the used, dried carbonaceous adsorbent, the regeneration process via pyrolysis generates pyrolysis gas containing considerable amounts of SOx compounds. After combustion of the pyrolysis gas, flue gas is obtained that is rich in SOx compounds. Before such flue gas can be discharged, it must be cleaned and in particular the SOx compounds must be removed therefrom in order to comply with the statutory emission regulations. The high amount of SOx presents a challenge in removing it from the flue gas in a manner whereby the overall regeneration process of the carbonaceous adsorbent remains economically feasible.

Therefore, it is desirable to find a method for the regeneration of carbonaceous adsorbent that is contaminated with sulfur contaminants, wherein the method is economical and cost-effective while simultaneously complying with the statutory emission regulations for flue gases generated during the process. Preferably, the amount of waste streams, i.e., by-products that arise during the regeneration process and must be discharged, is minimized.

Attempts have already been made to solve these problems by means of the use of calcium hydroxide or calcium carbonate whereby SO₂ is captured as calcium sulfite and converted to calcium sulfate (gypsum). However, gypsum as a final product is not ideal due to the limited reusability, the sensitivity to moisture, and the potential environmental problems. The material easily attracts water, whereby it can harden or degrade, which complicates storage and processing. In practice, the reusability of gypsum is limited and it can, when it ends up at landfills, form hydrogen sulfide gas (H₂S) under anaerobic conditions, which is both toxic and a nuisance. Furthermore, it unnecessarily takes up a great deal of space at landfills.

A particular advantage of the use of ammonia water compared to calcium-based reagents is the very high solubility of the ammonium sulfate formed. The solubility of ammonium sulfate in water amounts to approximately 700 g/L at 20°C, while the solubility of calcium sulfate (gypsum), the reaction product when using calcium hydroxide or calcium carbonate, amounts to only approximately 2 g/L. This difference of a factor of approximately 300 has as a consequence that ammonium sulfate remains fully present in dissolved state in the liquid phase. Through the use of ammonia water as a reagent, no solid calcium sludge is formed and no dewatering of solid reaction products, with the additional residual streams of wastewater and gypsum, is required.

According to the present invention, a method is provided for the regeneration of carbonaceous adsorbent, comprising the steps of:
a) providing a carbonaceous adsorbent that contains sulfur contaminants,
b) pyrolyzing the absorbed sulfur contaminants in a furnace, whereby pyrolysis gases are generated that contain SO₂,
c) combusting the pyrolysis gases in an afterburner, whereby flue gases are obtained containing SO₂,
d) cooling the flue gases and removing dust from the flue gases,
e) reacting the SO₂ present in the flue gases with ammonia water, whereby ammonium sulfate is formed.

This method offers a fully circular process whereby residual streams from biogas production can be converted into a valuable fertilizer, without waste being generated. The heavily S-loaded carbon and the ammonia water, both by-products of biogas production, are combined to form ammonium sulfate, which can be applied directly in agriculture. This closes the cycle completely: crops take up the fertilizer, produce food, and the residual streams thereof again feed the biogas production. Instead of regarding these substances as waste, they make a useful contribution to sustainable agriculture.

Furthermore, the method provides both economic and technical advantages. The application possibilities of biobased ammonia water are limited and the production of ammonium sulfate is more advantageous than the landfilling of gypsum. Moreover, the method can contribute to a better CO₂ footprint for biogas producers. Furthermore, the process offers flexibility, as it can also serve as a standard scrubber during the reactivation of other types of activated carbon, without the need for an additional condenser. This realizes not only a more sustainable, but also a more efficient system.

Ammonium sulfate has applications in agriculture, but also other technical applications such as its use in fire extinguishers.

### DETAILED DESCRIPTION

The invention relates to a method for the regeneration of carbonaceous adsorbent.

Unless otherwise defined, all terms used in the description of the invention, including technical and scientific terms, have the meaning commonly understood by a person skilled in the art to which the invention pertains. For a better understanding of the description of the invention, the following terms are explicitly defined.

As used in this document, "a", "an" and "the" refer to both the singular and the plural, unless the context clearly dictates otherwise. For example, "a segment" means one or more than one segment.

The terms "comprise", "comprising", "consist of", "consisting of", "provided with", "contain", "containing", "encompass", "encompassing", "include" and "including" are synonyms and are inclusive or open terms indicating the presence of what follows, and do not exclude or preclude the presence of other components, features, elements, members or steps known from or described in the prior art.

The citation of numerical ranges by their endpoints includes all integers, fractions and/or real numbers between the endpoints, inclusive.

As used herein, the term "carbonaceous adsorbent" refers to a carbon-containing material that consists partially or largely of carbon and is capable of adsorbing substances, in particular contaminants, from a gas or liquid.

In particular, a carbonaceous material is meant that has undergone a thermal and/or chemical activation process and as a result contains a large number of pores, whereby the contact surface area of this material is considerably increased relative to non-activated material. This material is characterized by a high adsorption capacity for one or more substances.

Therefore, the carbonaceous adsorbent is also known as and may be referred to herein as "activated carbon", "active carbon", "activated charcoal", "active charcoal" or "Norit".

The carbonaceous adsorbent can occur in any form as known or common in the art, including powder form, granular form, extruded form, spherical form, or woven form. In general, the carbonaceous adsorbent will be used in granular form, extruded form, or spherical form.

In a particular embodiment of the present invention, the carbonaceous adsorbent may be impregnated with a catalyst.

In a particular embodiment, the catalyst is an inorganic salt, hydroxide, or oxide containing a metal ion selected from the group consisting of K⁺, Na⁺, Cu²⁺, Mn²⁺, Mg²⁺, Ca²⁺ and Fe³⁺. In a particular embodiment, the catalyst is selected from NaOH, Fe(OH)₃, K₂CO₃, KI, I₂, KOH, CaO, Ca(OH)₂, MgO, CuO, and MnO. The amounts of impregnated catalyst can vary widely and are typically between 0.5 and 35.0 weight percent, for example between 1.0 and 25.0 weight percent or between 3.0 and 15.0 weight percent. Typically, the amount of catalyst is chosen based on the application and the type of catalyst.

Examples of embodiments of catalyst-impregnated carbonaceous adsorbent include: carbonaceous adsorbent impregnated with 1.0 to 30.0 weight percent NaOH, 1.0 to 20.0 weight percent Fe(OH)₃, 1.0 to 30.0 weight percent K₂CO₃, 1.0 to 10.0 weight percent KI, 1.0 to 10.0 weight percent I₂, 1.0 to 20.0 weight percent KOH, 1.0 to 10.0 weight percent CaO, 1.0 to 10.0 weight percent Ca(OH)₂, 1.0 to 10.0 weight percent MgO, 1.0 to 10.0 weight percent CuO, and/or 1.0 to 10.0 weight percent MnO. Herein, the weight percentage is expressed relative to the weight of the carbonaceous adsorbent without the impregnated catalyst.

The carbonaceous adsorbent is typically used to remove contaminants from a methane-containing gas, in particular a gas such as biogas, landfill gas, or synthesis gas, by bringing the gas into contact with the carbonaceous adsorbent, for example by passing the gas through a bed of the carbonaceous adsorbent. Hereby, the contaminants are adsorbed onto the carbonaceous adsorbent.

In a particular embodiment, the gas to be purified can be brought into contact one or more times with the carbonaceous adsorbent, wherein the carbonaceous adsorbent is present in free form or in a form wherein it is surrounded by a gas-permeable packaging or a gas-permeable membrane. Contact between the gas and the carbonaceous adsorbent can take place by incubation without airflow or by contact wherein the gas is guided passively or actively at a constant or variable flow rate through a space containing the carbonaceous adsorbent.

When the maximum loading capacity of the carbonaceous adsorbent has been reached, that is, when no further contaminants can be efficiently adsorbed and the carbonaceous adsorbent is saturated, the carbonaceous adsorbent must be regenerated, wherein the method according to the invention can be applied.

Contaminants that can be adsorbed from the gas by the carbonaceous adsorbent include sulfur contaminants. The term "sulfur contaminants" refers herein to any sulfur-containing compound and is not limited to H₂S (hydrogen sulfide) or SO₂ (sulfur dioxide). Sulfur contaminants thus include compounds from the group of sulfides, thiols, disulfides, polysulfides, thioesters, sulfoxides, sulfones, thiosulfinate compounds, sulfimides, sulfoximides, sulfonediimines, S-nitrosothiols, sulfur halides, thioketones, thioaldehydes, thiocarboxylates, thioamides, sulfuric acids, sulfonate compounds, or sulfuranes.

In a particular embodiment, the loading of the used carbonaceous adsorbent with sulfur contaminants may be at least 5.0 weight percent, for example at least 15.0 weight percent or even at least 20.0 weight percent. In a particular embodiment, the loading is between 20.0 and 60.0 weight percent.

Herein, the weight percentage is expressed as the total weight percentage of sulfur-containing contaminants relative to the dry used carbonaceous adsorbent. By "dry used carbonaceous adsorbent" is meant a carbonaceous adsorbent with adsorbed sulfur-containing and other contaminants, which has been dried for at least 4 hours at a temperature of 110°C.

According to the method of the present invention, the used carbonaceous adsorbent, i.e., the carbonaceous adsorbent containing a catalyst and/or adsorbed contaminants, is subjected to a pyrolysis step and preferably also to a reactivation step.

During the pyrolysis step, at least a portion of the contaminants is pyrolyzed, whereby the contaminants are broken down and/or desorbed from the carbonaceous adsorbent.

In one embodiment, the carbonaceous adsorbent is simultaneously or subsequently exposed to steam in order to reactivate the carbonaceous adsorbent. The steps of pyrolysis and reactivation are generally carried out in a furnace.

The furnace for the regeneration of the used carbonaceous adsorbent according to this invention can be a fluidized bed, a rotary kiln, a multi-stage furnace, or a shaft furnace, but preference is given in the present method to a multiple-hearth furnace.

The multiple-hearth furnace (MHF) is a reactivation furnace consisting of multiple hearths, within which the pyrolysis and reactivation process takes place. The furnace is designed to efficiently reactivate saturated activated carbon.

In a preferred embodiment, the multiple-hearth furnace comprises an even number of hearths. It is optimal to make use of an even number of hearths, as this improves the efficiency of the flue gas extraction. The multiple-hearth furnace can thus comprise, for example, 4, 6, 8, or 10 hearths, preferably 6 or 8 hearths. A furnace with 6 or even 8 hearths can contribute to a better quality of the process and the end products. This is because a greater number of levels ensures a more gradual and more precise temperature control in different zones of the furnace. This is particularly important for processes in which a constant and stable temperature is crucial for optimal processing. Furthermore, 6 or even 8 hearths is advantageous for the processing of PFAS-containing materials, because the residence time and the temperature distribution can be better tailored to the required decomposition processes. By further refining the temperature control.

The multiple-hearth furnace preferably comprises a rotating central shaft with rabble arms, which ensure that the activated carbon moves through the various hearths. The rabble arms transport the material alternately toward openings in the center and the outer shell of the furnace, thereby agitating the carbon granules and ensuring optimal exposure to the desired atmosphere.

The hearths in the multiple-hearth furnace preferably create different temperature zones, including drying zones, decomposition zones (pyrolysis zones), reactivation zones, and cooling zones.

In one embodiment, the rotating central shaft and rabble arms are cooled by injecting cooling air into the double-walled central shaft and rabble arms. The cooling of the central shaft and arms ensures a stable construction during operation at high temperature. This heated air can subsequently be used as secondary air for the afterburner, whereby the energy efficiency of the installation is further improved.

In one embodiment, steam is also injected into the furnace. The steam reacts with the carbon in the activated carbon. As a result, the softer cores in the granulate burn out and a renewed pore structure is created, whereby the adsorption capacity of the carbon is restored. Preferably, wet steam is avoided in order to prevent faster erosion of the refractory material. The steam is preferably injected into the reactivation zones of the furnace.

The steam is preferably injected at a pressure of at least 2 bar, such as for example between 2 and 4 bar or between 2 and 3 bar. The mass flow rate of the steam may be between 500 and 1,500 kg/h, but is preferably between 800 and 1,000 kg/h.

The heat absorbed in the cooling zone can be reused in the upper zones, whereby the energy consumption is optimized.

The multiple-hearth furnace offers an extremely efficient and energy-saving solution for the reactivation of activated carbon, thanks to continuous operation with controlled temperature zones, an increased contact surface between steam and carbon, optimal energy recovery through reuse of flue gases and heated air, and minimal product losses through precise oxygen control and controlled burner operation. This robust technology meets stringent emission standards and operational requirements, whereby it is the ideal choice for high-quality carbon reactivation.

Upon leaving the furnace, the carbonaceous adsorbent will typically have a temperature between 400°C and 800°C, usually between 400°C and 600°C. To prevent the formation or buildup of hotspots, cooling is preferably carried out rapidly to the intended temperature.

Upon leaving the furnace, the regenerated carbonaceous adsorbent can be cooled to a temperature of less than 250°C, for example less than 100°C, such as less than 40°C, preferably below 25°C, more preferably below 20°C and most preferably below 15°C.

Cooling can be achieved by means of quenching or with the aid of a heat exchanger.

In the case of cooling by quenching, the cooling medium can be selected from water, steam, air, or an inert gas such as, for example, nitrogen or carbon dioxide. Any known quench apparatus can be used, such as, for example, a fluidized bed, a cooling tower, a moving floor, a water bath, or a vibrating belt wherein the cooling medium is blown in.

In a preferred embodiment, a heat exchanger is used to cool the carbonaceous adsorbent, wherein the carbonaceous adsorbent and the cooling medium remain separated from each other. Possible media in the heat exchanger include air or water, including ice water. The heat exchanger may contain one, two, or more screws (cooling screws) that rotate and advance the carbonaceous adsorbent. As an alternative, the heat exchanger may contain a rotating spiral or a rotating tube.

Furthermore, in a particular embodiment, the reactivated carbonaceous adsorbent can be sieved to obtain carbonaceous adsorbent with the desired particle size and distribution. The sieving can continue in one or more sieving apparatuses, which can optionally separate different particle sizes from each other.

It has been established that when the carbonaceous adsorbent has been used for the purification of a gas or liquid in a process in which reducing conditions prevail or in which a low oxygen concentration is present, the catalyst on the carbonaceous adsorbent can be at least partially in a reduced state and can contain contaminants that are likewise in a reduced state. Furthermore, also as a result of the oxygen-poor atmosphere in at least a part of the furnace, a portion of the catalyst can be reduced. When these components are brought into contact with air, they can be oxidized.

To prevent the reduced catalyst and other reduced components from oxidizing in an uncontrolled manner when the carbonaceous adsorbent is transported, stored, and/or handled before it is introduced into the furnace, it has proven advantageous to carry out a controlled oxidation, i.e., oxidation and simultaneous cooling with air. This can prevent spontaneous ignition and hotspot formation upstream of the furnace.

In a particular embodiment in which the carbonaceous adsorbent contains a catalyst, air is blown through the carbonaceous adsorbent, which contains a catalyst and adsorbed contaminants. As a result, the catalyst and/or other components present on the carbonaceous adsorbent that are in a reduced state are oxidized and simultaneously cooled.

Controlled oxidation of catalyst in a reduced state can be carried out by blowing air through the carbonaceous adsorbent in one or more ventilation steps, wherein the carbonaceous adsorbent is passed through these steps. The ventilation steps can be carried out prior to introduction into the furnace or during the pyrolysis and reactivation in the furnace, as well as prior to cooling, during cooling, or after cooling.

In general, the linear velocity of the air blown through the carbonaceous adsorbent must be high enough to enable oxidation of the catalyst and/or other reduced components, as well as simultaneous cooling of the carbonaceous adsorbent. A suitable linear velocity is at least 0.01 m/s, for example at least 0.10 m/s, preferably between 0.10 and 1.50 m/s, more preferably between 0.10 and 0.60 m/s. The linear velocity can be adjusted via the flow rate, for example with the aid of a fan that blows air through the carbonaceous adsorbent. The linear velocity can conveniently be measured with an anemometer.

In one embodiment, both the carbonaceous adsorbent that contains a catalyst and adsorbed contaminants before the method for the regeneration of the carbonaceous adsorbent is started, and the reactivated carbonaceous adsorbent can be immersed in and/or impregnated with water.

Additionally or alternatively, the reactivated carbonaceous adsorbent can be impregnated with an inert gas such as CO₂ or nitrogen. This has the advantage that the formation of hotspots during storage and in particular during the start-up phase of a process for removing contaminants from a liquid or gas is minimized.

In addition to the stream of regenerated and reactivated carbonaceous adsorbent, the method according to the present invention also generates a stream of pyrolysis gas. This pyrolysis gas contains SOx compounds, in particular SO₂.

According to the invention, the pyrolysis gases containing SO₂ are combusted in an afterburner, whereby flue gases are obtained that also contain SO₂.

The flue gases from the furnace, and optionally the heated cooling air from the central shaft of the multiple-hearth furnace, are introduced together into the afterburner. The afterburner contains burners, such as natural gas burners, which increase the combustion temperature and ensure an excess of oxygen (at least 6% O₂) to guarantee complete oxidation. The afterburner ensures complete combustion of the contaminants. In one embodiment, a reduction of NOx emissions can also be achieved via controlled injection of urea ((NH₂)₂CO).

The minimum temperature in the afterburner is preferably 750°C, preferably 800°C, more preferably 800°C. In a further or other embodiment, the residence time of the flue gas in the afterburner is at least 2 seconds. If hazardous waste with a content of more than 1 weight percent halogenated organic substances, expressed in chlorine, is combusted, the temperature can be increased such that the resulting gases are heated for at least 2 seconds at at least 1,100 °C.

In the afterburner, sulfur (S) is oxidized to SO₂, chlorine (Cl) and fluorine (F) react with water vapor and form HCl and HF respectively, carbon monoxide (CO) and hydrogen (H₂) are oxidized to CO₂ and H₂O, and residual amounts of organic compounds are oxidized to CO₂ and H₂O.

In one embodiment, urea and/or ammonia is injected into the furnace to control NOx formation, wherein urea and/or ammonia converts these nitrogen oxides into nitrogen (N₂) and water vapor (H₂O).

The flue gases are then cooled and dust is removed therefrom.

The cooling of the flue gas can be carried out with one or more suitable cooling devices such as a heat exchanger. The removal of dust from flue gas can likewise be carried out with mechanical methods or electrostatic methods.

Electrostatic methods comprise an electrostatic precipitator or a Cottrell electrical dust remover, wherein high direct current voltage is applied (25,000 to 100,000 volts) to charge and collect particulate matter particles. The deposited particles are then washed or shaken loose and discharged to a waste processing installation. In a preferred embodiment, one or more mechanical dust removers are applied. Examples of dust removers are bag filters (also called fabric filters or sleeve filters), cyclone filters, wet scrubbers, or ceramic filters.

The cooling and the dust filtration can likewise be carried out alternately, wherein the flue gases first undergo a first cooling and a first dust removal and subsequently a second cooling and a second dust removal.

In one embodiment, in a first cooling, the temperature of the flue gases is reduced to at most 350°C, after which a first dust filtration is carried out. In a further embodiment, in a second cooling, the temperature of the flue gases is subsequently reduced to at most 170°C, after which a second dust filtration is carried out.

According to the invention, after the removal of dust from the flue gas, the SO₂ present in the flue gases is reacted with ammonia water whereby ammonium sulfate is formed.

In one embodiment, the temperature of the flue gases is reduced to at most 70°C, preferably at most 65°C, prior to reacting with ammonia water. At this lower temperature, gases dissolve better, which improves the efficiency of the gas scrubber. If the flue gas enters at 175°C, this high temperature can hinder the absorption of SO₂. The term "ammonia water" is synonymous with "ammonium water" and refers to an aqueous solution of ammonia (NH₃), wherein ammonia is present in dissolved form. In one embodiment, ammonia water concerns a solution in which ammonia is dispersed in water and is in partial equilibrium, or not, with ammonium ions (NH₄⁺) and hydroxide ions (OH⁻). Preferably, ammonia water comprises a concentration of ammonia of 5 to 30 weight percent, more preferably 10 to 25 weight percent, and most preferably 15 to 20 weight percent. Ammonia water may further contain additives for stabilization or for influencing physicochemical properties, such as pH adjustment or corrosion prevention. The ammonia water may be of fossil origin or may be bio-based ammonia water. Preferably, use is made of bio-based ammonia water.

This reaction is preferably carried out in a gas scrubber or a scrubbing column, wherein ammonia water is used to scrub the flue gas. The term "reacting" is synonymous with "scrubbing" and generally means "absorbing," which means that SO₂ is absorbed by the ammonia water and forms ammonium sulfate.

In one embodiment, the dust-free flue gas is directed to a gas scrubber, in which ammonia water is present or is injected, so that ammonium sulfate is produced by the absorption of SO₂ in a liquid with ammonia water (NH₃/H₂O/NH₄OH).

The ammonia water reacts with the flue gases and forms ammonium sulfate and ammonium sulfite, which in turn reacts further to form ammonium sulfate. The chemical reactions proceed as follows:

NH₃ + H₂O + SO₂ → NH₄HSO₃

NH₄HSO₃ + NH₃ → (NH₄)₂SO₃

2 NH₄OH + SO₂ → (NH₄)₂SO₃ + H₂O

2 (NH₄)₂SO₃ + O₂ → 2(NH₄)₂SO₄

These reactions remove SO₂ from the gas stream and produce ammonium sulfate. Over time, the ammonium sulfate will accumulate in the aqueous ammonia solution and precipitate out of the solution. The solid precipitate can then be removed from the gas scrubber and processed for use as a fertilizer.

This embodiment offers the advantage that, on the one hand, despite a possibly high loading of sulfur contaminants in the used carbonaceous adsorbent, SOx compounds can be effectively removed therefrom, so that statutory regulations are complied with, and, on the other hand, the resulting product constitutes a valuable product stream. In this regard, it has been established that the removal of dust from the flue gas is desirable in order to obtain a sufficient quality and purity of ammonium sulfate for use in agriculture.

The wet ammonia water gas scrubbing further offers several advantages, in particular higher efficiency in the removal of SO₂ compared to dry gas scrubbing, and improved control of gas emissions through an optimized pH management system.

The wet gas scrubbing can further, when low or no S-laden AC is being processed, be deployed as a wet condenser. In this mode, the system assists in the cooling and condensation of flue gases.

This step of the method preferably takes place at a pH between 5 and 8, preferably between 5 and 7, preferably between 5.5 and 6.5 or even between 5.8 and 6.2. At too high a pH, a disproportionately large portion of the added ammonia (ammonium) is discharged from the SO₂ scrubber. A pH between 5.5 and 8 promotes good uptake and conversion to sulfate. It increases the absorption rate of SO₂ compared to the lower pH values. Moreover, the reaction vessel and the associated equipment need not be manufactured from a more exotic, corrosion-resistant alloy because the pH is virtually neutral.

In one embodiment, an aqueous solution is obtained with an ammonium sulfate concentration between 100 and 400 g/L, preferably between 100 and 300 g/L, more preferably between 150 and 250 g/L.

In one embodiment, the scrubbing with ammonia water is carried out at a pH between 5.5 and 6.5, whereby an aqueous solution with an ammonium sulfate concentration between 100 and 300 g/L, preferably between 150 and 250 g/L, is obtained.

Although the amount of ammonia (ammonium) that flows with the flue gases out of the gas scrubber (the ammonia slip) is minimized, NH₃ may still be present in the flue gases after the scrubbing with ammonia water.

In one embodiment, the flue gases are, after the ammonia scrubbing, brought into contact with sulfuric acid, wherein the remaining NH₃ present in the flue gases is reacted with sulfuric acid, whereby ammonium hydrogen sulfate (NH₄HSO₄) and/or ammonium sulfate ((NH₄)₂SO₄) is formed.

In a further embodiment, the reaction of the remaining NH₃ present in the flue gases with sulfuric acid is carried out by scrubbing the flue gases with sulfuric acid in a gas scrubber, whereby ammonium hydrogen sulfate (NH₄HSO₄) and/or ammonium sulfate ((NH₄)₂SO₄) is obtained. The gas scrubber is preferably an acid gas scrubber.

In another or further embodiment, the reaction of the remaining NH₃ present in the flue gases with sulfuric acid is carried out at a pH between 3 and 4. At a pH of 3-4, ammonia remains in solution as ammonium. A higher pH would cause additional NH₃ emissions.

In one embodiment, the temperature of the flue gases in the acid gas scrubber is at most 70°C, preferably at most 65°C, prior to reacting with ammonia water. At this lower temperature, gases dissolve better, which improves the efficiency of the gas scrubber. If the flue gas enters at 175°C, this high temperature can hinder the absorption of NH₃.

The flue gas may optionally undergo a further step consisting of removing at least a portion of the aerosols from the gas stream. A Wet Electrostatic Precipitator (WESP) can be used as an aerosol removal means.

A WESP is effective in collecting ammonia aerosols, as well as many other aerosols or particles that may be present in the gas stream. During the combustion of sulfur components, the largest portion is converted to sulfur dioxide (SO₂), but a small percentage is further oxidized to sulfur trioxide (SO₃). This SO₃ is not completely removed by the wet gas scrubber and requires an additional filtration step. The WESP is designed to remove the remaining SO₃ particles and particulate matter from the flue gases. This is accomplished by means of electrostatic discharge in a water-saturated environment.

In one embodiment, dry reagents are added to the flue gases prior to reacting the SO₂ present in the flue gases with ammonia water. The dry reagents are, for example, sodium bicarbonate, sodium carbonate, calcium hydroxide, powdered activated carbon, or a combination thereof, preferably sodium bicarbonate, sodium carbonate, powdered activated carbon, or a combination thereof. Preferably, the dry reagents are added to the flue gases at multiple locations in the path between the afterburner and the gas scrubber.

By adding dry reagents, mercury, dioxins, furans, and other harmful combustion by-products can be removed from the flue gases in addition to dust. The resulting reaction products can be discharged via the dust remover as dry solids, without forming additional liquid residual streams.

In a further embodiment, the dry reagents are added based on the composition of the flue gases, such that the removal of the various contaminants is optimized. As a result, halogens are preferentially removed in the dry phase, while SO₂ is primarily removed in the gas scrubber through the reaction with ammonia water.

In a further embodiment, the addition of dry reagents is combined with the scrubbing with ammonia water and the scrubbing with sulfuric acid (acid gas scrubber) as described herein. This combination maximizes the purity level of the ammonium sulfate formed, so that the ammonium sulfate can be used directly as a fertilizer without further post-treatment.

In one embodiment, the flue gases are, prior to the reaction with ammonia water, passed through a pre-purification scrubber. This pre-purification scrubber is arranged to remove any residual contaminants, other than SO₂, from the flue gases. Such contaminants include, among others, dust particles and hydrogen fluoride (HF), which can arise during the combustion of the pyrolysis gases in the afterburner. The pre-purification scrubber may be a wet scrubber in which water or a mild aqueous solution is used as a reagent.

In a second aspect, the invention relates to a system suitable for carrying out the described embodiments of the above method.

The system arranged to perform the method according to any one of the above embodiments comprises a furnace that is arranged for pyrolyzing a carbonaceous adsorbent containing sulfur contaminants, an afterburner that is connected to the furnace and that is arranged for combusting pyrolysis gases from the furnace to produce flue gas, one or more cooling devices that are arranged for cooling the flue gas, connected to the afterburner and optionally to one or more dust removers that are arranged for removing dust from the flue gas, wherein the afterburner or the dust remover is connected to one or more scrubbing columns or gas scrubbers that are arranged to react the SO₂ present in the flue gas with ammonia water.

The one or more scrubbing columns or gas scrubbers are arranged to react the SO₂ present in the flue gas with ammonia water and are therefore wet scrubbing columns or wet gas scrubbers. The term "wet gas scrubber" or "wet scrubbing column" refers to a device in which the flue gas is brought into contact with a liquid reagent, whereby contaminants from the flue gas are reacted in the liquid phase. Ammonia water is a clear, colorless liquid in which ammonia is dissolved in water and is supplied directly as a liquid reagent to the gas scrubber.

This is in contrast to a dry gas scrubber based on dry scrubbing agents such as calcium hydroxide and/or calcium carbonate, wherein the reagent must first be converted from a solid form to a suspension by mixing it with water, without obtaining a true solution. A gas scrubber based on these reagents is therefore designed for solids or suspensions, wherein solid reaction products are formed. With such a dry gas scrubber, the water must be removed via additional process steps such as centrifugation, gravitational drainage, and active drying, in order to obtain the solid reaction product from the suspension or the precipitate, whereby wastewater and gypsum are formed as residual products. The wastewater must be further purified or disposed of, and the gypsum can only be utilized under strict conditions, and is often landfilled. Each additional process step requires energy, handling, and follow-up. In the present system, by contrast, the ammonium sulfate formed in the wet gas scrubber is directly usable as a fertilizer, without additional process steps.

### DESCRIPTION OF THE FIGURES

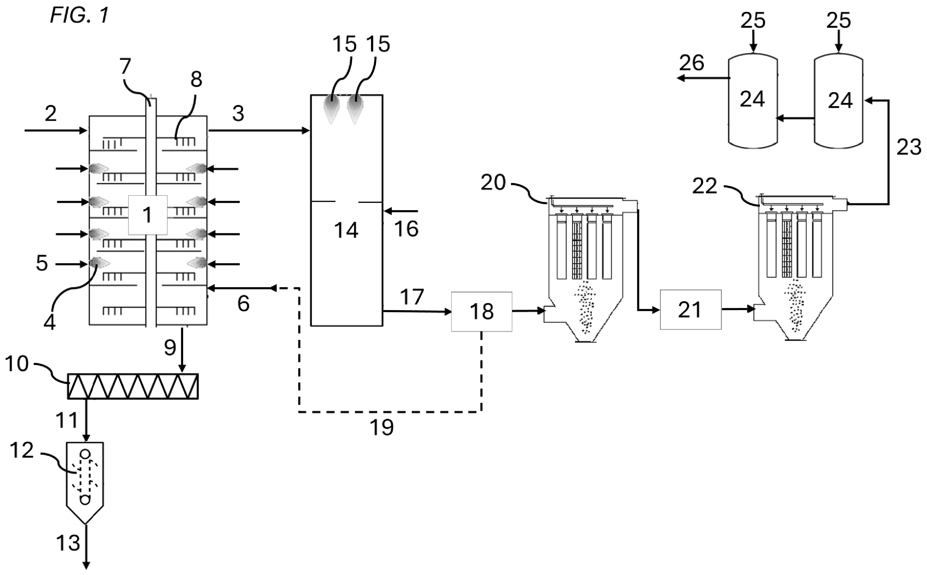

**Figure 1** shows a schematic overview of an embodiment of a system configured to perform the method according to an embodiment of the invention.

The method for regenerating carbonaceous adsorbent with adsorbed sulfur contaminants, as described above in the various embodiments, can be performed in a system that is schematically depicted in Figure 1.

Figure 1 shows a furnace (1) with an inlet (2) for the introduction of used carbonaceous adsorbent and an outlet (3) where the pyrolysis gas leaves the furnace. The furnace (1) comprises in this embodiment eight natural gas burners (4), which are positioned strategically in the furnace to ensure a uniform temperature distribution. Each natural gas burner has an inlet (5) for combustion gas. Furthermore, an inlet (6) is shown for the supply of steam into the furnace.

The furnace (1) is a multiple-hearth furnace comprising a rotating central shaft (7) with rabble arms (8), which ensure that the activated carbon moves through the various hearths. The rabble arms (8) transport the material alternately toward openings in the center and the outer shell of the furnace (1), thereby agitating the carbon granules and ensuring optimal exposure to the desired atmosphere.

The multiple-hearth furnace in the current embodiment is an MHF with the following hearths (zones):
- Zone 1 & 2 - Drying zones (0-200°C): In these zones the carbonaceous adsorbent is fed in and the free water is evaporated from the carbon, so that the subsequent thermal processes can proceed more efficiently.
- Zone 3 - Decomposition zone (up to 700°C): The temperature is further increased, and the adsorbed organic contaminants are broken down and removed in an oxygen-poor atmosphere. Non-volatile components undergo pyrolysis.
- Zone 4, 5 - Reactivation zones (up to 850°C): In these zones steam is injected, which reacts with the carbon in the activated carbon. As a result, the softer cores in the granulate burn out and a renewed pore structure is created, whereby the adsorption capacity of the carbon is restored.
- Zone 6 - Cooling zone (up to 400°C): Here the carbon is cooled again, wherein the injected steam absorbs the thermal energy of the carbon. The heated steam is then fed to the reactivation zones to optimize energy consumption. Here the reactivated carbon leaves the furnace.

Within this furnace (1), the drying zone is located at the inlet side of the carbonaceous adsorbent; the cooling zone is located at the outlet side of the carbonaceous adsorbent. After leaving furnace (1) via outlet (9), the reactivated carbonaceous adsorbent is sent to a cooling device (10), where it is cooled to a temperature of less than 250°C, for example less than 100°C or less than 40°C, preferably below 45°C, or even below 15°C. In one embodiment, the cooling device (10) consists of one or more cooling screws. A cooling screw is equipped with a double-walled housing and a hollow shaft, through which cooling water flows to efficiently dissipate the heat. It is preferably desired that the carbonaceous adsorbent is cooled relatively quickly, preferably within a period of 0.5 to 15 minutes, for example 1 to 5 minutes.

Via outlet (11) of cooling device (10), the carbonaceous adsorbent can be sieved in one or more sieving devices (12), after which it is transported to a location for further processing or storage (13).

The system for the regeneration of carbonaceous adsorbent also comprises equipment for the cleaning and processing of pyrolysis gas that leaves furnace (1) via outlet (3). The pyrolysis gas is directed to an afterburner (14), where it is combusted. In the afterburner (14), natural gas burners (15) are provided with an inlet for combustion gas (not shown) that increase the combustion temperature and ensure complete combustion of the contaminants. Furthermore, a reduction of NOx emissions can also be achieved via controlled injection of urea (NH₂)₂CO (16).

After the contaminants have been combusted, the flue gases leave the afterburner (14) via an outlet (17) at the bottom of the afterburner (14) and are directed to a cooling device, in this embodiment a steam boiler (18), to reduce the temperature before they are further processed in the flue gas cleaning. The produced steam (19) can be used in the multiple-hearth furnace and the surplus can be injected into a steam network.

In the present embodiment, the flue gases are cooled in the steam boiler (18) to 350°C and subsequently directed to a ceramic dust filter (20). Because a ceramic filter is used, the possibility exists to add catalysts. As a result, the system can not only remove particles and harmful components from the flue gases, but also contribute to the reduction of NOx emissions. This offers an additional advantage in terms of emission standards and environmental performance of the installation. Performing dust filtration at elevated temperature results in an increased removal efficiency.

After the first dust filtration (20), the flue gases are again directed through a heat exchanger (21) (economizer). Here, the residual heat of the flue gases can be recovered to preheat the steam feed water and/or process water (not shown). This contributes to an energy-efficient process, whereby less primary energy is needed to keep the system running. Hereby the flue gas temperature is reduced to approximately 160-170°C.

After the second cooling (21), the flue gases are again directed through a dust filter (22). In this embodiment, the second dust filter (22) is a bag filter. Herein, the remaining dust particles and salts are definitively removed, an additional particulate matter filtration takes place to minimize emissions, and dust emissions are controlled to ensure that the flue gases comply with the emission standards.

The bag filter can for example be made of glass fiber, with a PTFE (Teflon) coating, which ensures high chemical and thermal resistance and prevents contaminants from adhering to the filter. The accumulation of recirculated reagent on the filter bags serves as an active layer and contributes to the extended residence time of the flue gases, whereby even more contaminants are adsorbed before the flue gases leave the filter. With this second-stage filtration, it is ensured that the flue gases are completely purified and comply with the strictest environmental standards before they are directed to the next flue gas treatment steps or the stack.

The dust-free flue gas (23) is then directed to one or more gas scrubbers (24), optionally supported by a forced ventilator (not shown), in which ammonia water (25) is present or injected. In this wet scrubbing, ammonium sulfate is produced by the absorption of SO₂ in a liquid with ammonia water (NH₃/H₂O/NH₄OH). The gas scrubbers operate at a pH between 5.5 and 8, preferably between 5.5 and 6.5, and absorb SO₂ and convert it into ammonium sulfate ((NH₄)₂SO₄). A pH between 6 and 8 promotes good uptake and conversion to sulfate. A pH that is too high or a concentration of ammonium sulfate that is too high can lead to excessive NH₃ emissions.

The gas temperature of the flue gases (23) at this point is preferably at most 70°C, or even at most 65°C. Cooling to this temperature can be achieved by means of a quench, whereby water is atomized, causing the flue gas temperature to drop to approximately 63°C. At this lower temperature, gases dissolve more readily, which improves the efficiency of the scrubber.

The gas stream is introduced into the gas scrubbers in an area above the ammonia water. The water in the ammonia water evaporates due to the heat of the gas stream, whereby the solution is concentrated and ammonium sulfate precipitates, which is subsequently removed from the gas scrubbers. The removed ammonium sulfate can subsequently be dried and granulated to obtain a marketable fertilizer product.

The cleaned flue gas leaves the gas scrubbers via outlet (26).

In a further embodiment (not shown), the flue gases are subsequently directed to an acid gas scrubber, wherein NH₃ is removed by absorption with sulfuric acid. The acid gas scrubber with a pH of 3-4 removes the remaining NH₃ and forms ammonium hydrogen sulfate (NH₄HSO₄) and/or ammonium sulfate ((NH₄)₂SO₄). At a pH of 3-4, ammonia remains in solution as ammonium. A higher pH would cause additional NH₃ emissions.

In this embodiment, the ammonia scrubbing is performed at approximately pH 6 and 200 g/L ammonium sulfate, which provides a good balance between efficiency and control of ammonia losses. This approach ensures good removal of both components and prevents undesirable interactions (too much SO₂ or NH₃ in the off-gases) that would occur with a single scrubber. At this pH and ammonium sulfate concentration, only 9% of the added ammonia ended up in the acid gas scrubber, with a consumption of 46 L/hour of sulfuric acid. At too high a pH, a disproportionately large portion of the added ammonium is discharged from the SO₂ scrubber to the NH₃ scrubber. And here it must again be removed with sulfuric acid.

However, at a pH of 8 and a concentration of 400 g/L ammonium sulfate, an undesirable situation arises: the air leaving the SO₂ scrubber contains more than 260,000 mg/nm³ ammonia. This is approximately 10 times more than necessary for the removal of SO. This is therefore a very inefficient ratio.

The flue gas may optionally undergo a further step consisting of removing at least a portion of the aerosols from the gas stream. A Wet Electrostatic Precipitator (WESP) can be used as an aerosol removal means.

A WESP is effective in collecting ammonia aerosols, as well as many other aerosols or particles that may be present in the gas stream. During the combustion of sulfur components, the largest portion is converted to sulfur dioxide (SO₂), but a small percentage is further oxidized to sulfur trioxide (SO₃). This SO₃ is not completely removed by the wet gas scrubber and requires an additional filtration step. The WESP is designed to remove the remaining SO₃ particles and particulate matter from the flue gases. This is accomplished by means of electrostatic discharge in a water-saturated environment.

As a result of the above method according to an embodiment of the present invention, the carbonaceous adsorbent is reactivated for reuse, SO₂ is removed from the flue gases, and ammonium sulfate is produced that can be used in agriculture.

## Claims

1. Method for the regeneration of carbonaceous adsorbent, comprising the steps of:
a. providing a carbonaceous adsorbent that contains sulfur contaminants,
b. pyrolyzing the absorbed sulfur contaminants in a furnace, whereby pyrolysis gases are generated that contain SO₂,
c. combusting the pyrolysis gases in an afterburner, whereby flue gases are obtained containing SO₂,
d. cooling the flue gases and removing dust from the flue gases,
e. reacting the SO₂ present in the flue gases with ammonia water, whereby ammonium sulfate is formed.

2. Method according to any one of the preceding claims, wherein the reaction of the SO₂ present in the flue gases with ammonia water is carried out by scrubbing the flue gases with ammonia water in a gas scrubber, whereby ammonium sulfate is obtained.

3. Method according to any one of the preceding claims, wherein the reaction of the SO₂ present in the flue gases with ammonia water is carried out at a pH between 5.5 and 8.

4. Method according to any one of the preceding claims, wherein the reaction of the SO₂ present in the flue gases with ammonia water is carried out at a temperature of at most 70°C, preferably at most 65°C.

5. Method according to any one of the preceding claims, wherein the flue gases are further brought into contact with sulfuric acid, wherein the remaining NH₃ present in the flue gases is reacted with sulfuric acid, whereby ammonium hydrogen sulfate (NH₄HSO₄) and/or ammonium sulfate ((NH₄)₂SO₄) is formed.

6. Method according to claim 5, wherein the reaction of the remaining NH₃ present in the flue gases with sulfuric acid is carried out by scrubbing the flue gases with sulfuric acid in a gas scrubber.

7. Method according to claim 5 or 6, wherein the reaction of the NH₃ present in the flue gases with sulfuric acid is carried out at a pH between 3 and 4.

8. Method according to any one of the preceding claims, wherein the furnace is a multiple-hearth furnace.

9. Method according to claim 8, wherein the multiple-hearth furnace comprises an even number of hearths, preferably 6 or 8 hearths.

10. Method according to any one of claims 8-9, wherein the multiple-hearth furnace comprises a rotating central shaft and rabble arms.

11. Method according to claim 10, wherein the rotating central shaft and rabble arms are cooled by injecting cooling air into the double-walled central shaft and rabble arms.

12. Method according to any one of the preceding claims, further comprising the step of introducing the flue gases into an aerosol removal device for removing ammonia aerosols and sulfur trioxide (SO₃) particles, preferably the aerosol removal device is a wet electrostatic precipitator (WESP).

13. A system arranged to perform the method according to any one of claims 1 to 12, comprising a furnace (1) that is arranged for pyrolyzing a carbonaceous adsorbent containing sulfur contaminants, an afterburner (14) that is connected to the furnace (1) and that is arranged for combusting pyrolysis gases from furnace (1) to produce flue gas, one or more cooling units (18), (21), that are arranged for cooling the flue gas, connected to the afterburner (14) and, optionally with one or more dust removers (20), (22), that are arranged for removing dust from the flue gas, wherein the afterburner or the dust remover is connected to one or more wet scrubbing columns or wet gas scrubbers (24) that are arranged to react the SO₂ present in the flue gas with ammonia water.

14. System according to claim 13, further comprising one or more acid gas scrubbers that are connected to an outlet (25) of the scrubbing columns or gas scrubbers (24) to receive the flue gas from the scrubbing columns or gas scrubbers (24).

15. System according to claim 13 or 14, further comprising an aerosol removal device, preferably a wet electrostatic precipitator (WESP), that is connected to an outlet (25) of the scrubbing columns or gas scrubbers (24) or to the outlet of the acid gas scrubbers to receive the flue gas from the scrubbing columns or gas scrubbers (24) or the acid gas scrubbers.
